# FASCICULE DE BREVET EUROPEEN

(11) **EP 3 317 102 B1**
(45) Date de publication et mention de la délivrance du brevet: **20.07.2022**
(21) Numéro de dépôt: 16739051.7
(22) Date de dépôt: 01.07.2016
(51) Int. Cl.: B32B 27/08, B29C 39/10, B32B 27/20, B32B 27/28, B32B 27/36, B29C 44/12, B32B 3/04, B32B 3/26

(54) **DISPOSITIF THERMOPLASTIQUE DÉFORMABLE À BASSE TEMPÉRATURE**
BEI NIEDRIGER TEMPERATUR VERFORMBARE THERMOPLASTISCHE VORRICHTUNG
LOW-TEMPERATURE DEFORMABLE THERMOPLASTIC DEVICE

(30) Priorité: 03.07.2015 FR 1556348
(43) Date de publication de la demande: 09.05.2018
(73) Titulaire: Robert, Alexis, 94360 Bry-sur-Marne (FR); Boyer, Pierre-louis, 75005 Paris (FR)
(72) Inventeur: Robert, Alexis, 94360 Bry-sur-Marne (FR); Boyer, Pierre-louis, 75005 Paris (FR)
(74) Mandataire: Lavoix
(86) Numéro de dépôt international: PCT/EP2016/065590
(87) Numéro de publication internationale: WO 2017/005658

(56) Documents cités:
- WO-A1-2015/030965
- CN-A- 101 747 598
- US-A1- 2004 155 029
- US-A1- 2012 101 417

## Description

La présente invention se rapporte à un dispositif déformable, du type comportant un premier matériau thermoplastique, ledit premier matériau étant sensiblement rigide à une température inférieure à un premier seuil et malléable à une température supérieure audit premier seuil.

US2012101417 porte sur un matériau composite destiné à constituer des produits orthopédiques et autres installés sur mesure. Le matériau composite est facilement formable lorsqu'il est chauffé à des températures d'environ 200°F pendant un temps d'au moins six à huit minutes et il est rigide à des températures d'environ 130°F.

Les thermoplastiques ayant une basse température de fusion, ou une basse température de transition vitreuse, peuvent être ramollis facilement afin d'être conformés à chaud selon une forme particulière, puis de conserver ladite forme après refroidissement. Un tel matériau thermoplastique est notamment connu du document CN101747598.

Cependant, à une température supérieure à leur point de fusion, de tels thermoplastiques prennent généralement une texture visqueuse qui les rend difficiles à manipuler. Le champ d'utilisations de ce type de matériaux s'en trouve limité.

La présente invention a pour but de résoudre ce problème. A cet effet, l'invention a pour objet un dispositif déformable du type précité, comprenant une enveloppe externe formée d'au moins un deuxième matériau souple, ladite enveloppe externe définissant un logement interne, le premier matériau remplissant le logement interne. L'au moins un deuxième matériau souple formant l'enveloppe externe est à l'état solide au moins jusqu'à un deuxième seuil de température supérieur 10 °C, préférentiellement de 20 °C, au premier seuil.

Suivant d'autres aspects avantageux de l'invention, le dispositif déformable comporte l'une ou plusieurs des caractéristiques suivantes, prises isolément ou suivant toutes les combinaisons techniques possibles :
- le premier seuil est compris entre 40 °C et 90 °C ;
- le premier matériau thermoplastique comprend un polymère thermoplastique, préférentiellement choisi parmi une polycaprolactone, un acide polylactique et un polycarbonate.
- le premier matériau thermoplastique comprend un agent électriquement et/ou thermiquement conducteur, ledit agent étant préférentiellement constitué de particules de carbone ;
- le premier matériau thermoplastique comprend une polycaprolactone et du noir de carbone, un pourcentage massique total de la polycaprolactone et du noir de carbone étant préférentiellement supérieur ou égal à 95%, un pourcentage massique du noir de carbone étant préférentiellement compris entre 10% et 23%, plus préférentiellement entre 15% et 20% ;
- l'au moins un deuxième matériau souple est un élastomère, préférentiellement une silicone ;
- le logement interne rempli du premier matériau thermoplastique a la forme d'une première couche interposée entre une deuxième et une troisième couches de deuxième matériau souple ;
- la première couche est traversée par une pluralité de ponts de deuxième matériau souple, lesdits ponts reliant les deuxième et troisième couches, lesdits ponts étant préférentiellement répartis de manière régulière sur une surface de la première couche ;
- le dispositif comprend en outre un appareil électrique au contact du premier matériau thermoplastique, ledit appareil étant apte à communiquer de la chaleur par effet Joule audit premier matériau thermoplastique.

L'invention se rapporte en outre à un procédé de fabrication d'un dispositif du type précité, comprenant les étapes suivantes : réalisation d'une première couche du premier matériau thermoplastique ; puis réalisation d'une deuxième couche de deuxième matériau souple ; puis positionnement de la première couche sur la deuxième couche ; puis coulage de deuxième matériau souple à l'état liquide sur les première et deuxième couches pour former la troisième couche, puis solidification dudit deuxième matériau.

L'invention se rapporte en outre à un procédé d'utilisation d'un dispositif du type précité, comprenant les étapes suivantes : chauffage du premier matériau thermoplastique pour le faire passer à une température comprise entre le premier seuil et le deuxième seuil ; puis conformation du dispositif selon une forme ; puis refroidissement du premier matériau thermoplastique pour le faire passer à une température inférieure au premier seuil.

Préférentiellement, le dispositif comprend un appareil électrique comme décrit précédemment et le chauffage du premier matériau thermoplastique est effectué au moyen dudit appareil électrique.

L'invention sera mieux comprise à la lecture de la description qui va suivre, donnée uniquement à titre d'exemple non limitatif et faite en se référant aux dessins sur lesquels :
- la figure 1 est une vue schématique, de dessus, d'un dispositif selon un mode de réalisation de l'invention dans une première configuration ;
- la figure 2 est une vue partielle, en coupe, du dispositif de la figure 1 dans la première configuration ; et
- la figure 3 est une vue partielle, en coupe, du dispositif de la figure 1 dans une deuxième configuration.

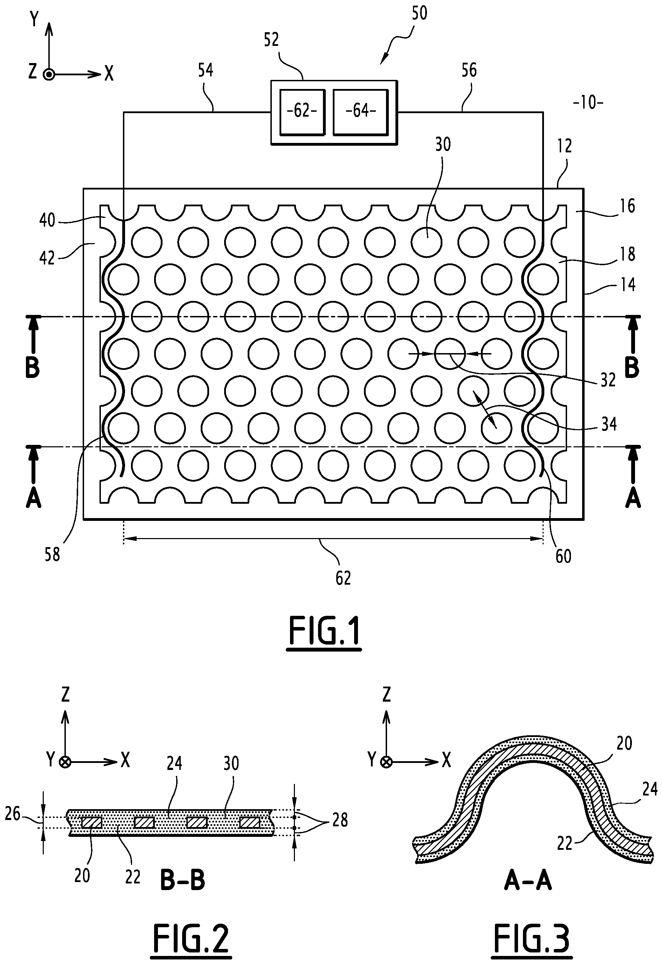

Les figures 1 à 3 représentent un dispositif 10 selon un mode de réalisation de l'invention. Dans la suite de la description, on considère une base orthonormée (X, Y, Z), la direction Z étant verticale.

Sur les figures 1 et 2, le dispositif 10 est dans une première configuration, sensiblement plane selon un plan (X, Y). Le dispositif 10 a par exemple un contour rectangulaire, avec des bords 12, 14 respectivement parallèles aux directions X et Y.

Le dispositif 10 comporte une enveloppe externe 16 qui définit un logement interne 18. Le logement interne 18 est préférentiellement fermé.

Dans le mode de réalisation représenté aux figures 1 à 3, le logement interne 18 forme une première couche 20 interposée entre une deuxième 22 et une troisième 24 couches de l'enveloppe externe 16.

Dans la première configuration des figures 1 et 2, les couches 20, 22, 24 sont planes, sensiblement disposées selon (X, Y) et empilées selon Z. A titre d'exemple, comme représenté sur la figure 2, la première couche 20 a une épaisseur 26 selon Z comprise entre 1 mm et 5 mm ; les deuxième 22 et troisième 24 couches ont une épaisseur 28 sensiblement identique, comprise entre 0,5 mm et 5 mm.

Préférentiellement, les dimensions de la première couche 20 selon X et Y sont inférieures aux dimensions des deuxième 22 et troisième 24 couches. Ainsi, à proximité des bords 12, 14, les deuxième 22 et troisième 24 couches sont au contact l'une de l'autre de manière continue, de sorte à fermer le logement interne 18.

Préférentiellement, l'enveloppe externe 12 comporte une pluralité de ponts 30 qui traversent la première couche 20 selon Z et relient les deuxième 22 et troisième 24 couches.

Le logement interne 18 a ainsi la forme d'un maillage disposé entre les ponts 30. Par exemple, selon le plan de coupe A-A de la figure 3, à l'écart des ponts 30, la première couche 20 est continue selon X. En revanche, selon le plan de coupe B-B de la figure 2, passant par des ponts 30, la première couche 20 est discontinue selon X.

Préférentiellement, les ponts 30 sont sensiblement identiques et/ou répartis de manière régulière sur une surface de la première couche 20. A titre d'exemple, comme représenté sur la figure 1, les ponts 30 ont une section circulaire dans un plan (X, Y), les centres desdits cercles étant disposés aux sommets de triangles équilatéraux.

En variante, les ponts 30 ont par exemple une section ovale ou polygonale.

Le logement interne 18 est rempli d'un premier matériau thermoplastique 40 formant la première couche 20. Le premier matériau 40 est sensiblement rigide à une température inférieure à un premier seuil T₁. Au-delà du premier seuil T₁, le premier matériau 40 est malléable ou liquide. Le premier seuil T₁ est inférieur ou égal à une température de transition vitreuse et/ou à une éventuelle température de fusion du premier matériau 40.

Préférentiellement, le premier seuil T₁ est compris entre 40 °C et 90 °C.

L'enveloppe externe 12 est formée d'au moins un deuxième matériau 42. Dans la description qui suit, on considère que l'enveloppe externe 12 est formée d'un seul matériau 42 et qu'en particulier les deuxième 22 et troisième 24 couches sont formées d'un même matériau 42. Cependant, selon une variante de réalisation, les deuxième 22 et troisième 24 couches sont formées de deux matériaux distincts, chacun desdits matériaux présentant les propriétés physiques décrites ci-après.

A température ambiante, comprise par exemple entre 10°C et 30°C, le deuxième matériau 42 est un solide souple, préférentiellement élastique. Le deuxième matériau 42 demeure à l'état solide au moins jusqu'à un deuxième seuil de température T₂, supérieur de 10 °C, préférentiellement de 20 °C, au premier seuil T₁. En d'autres termes, à une température comprise entre T₁ et T₂, l'enveloppe externe 12 est formée d'un solide souple et renferme un matériau 40 malléable ou liquide dans le logement interne 14.

Préférentiellement, le deuxième matériau souple 42 est électriquement isolant, afin de prévenir toute électrocution de l'utilisateur.

Selon une première variante de réalisation, représentée aux figures 1 à 3, le deuxième matériau souple 42 est un élastomère, notamment sous forme monobloc, c'est-à-dire d'un seul tenant. L'élastomère est en particulier une silicone.

Selon une deuxième variante de réalisation non représentée, le deuxième matériau souple 42 est une mousse, par exemple une mousse polyuréthane. L'avantage des mousses est qu'elles permettent une isolation électrique tout en conférant une légèreté au dispositif, ainsi qu'une déformation potentiellement plus conséquente qu'avec un élastomère.

Selon une troisième variante de réalisation non représentée, le deuxième matériau souple 42 est un matériau tissé, comprenant par exemple des fibres de de coton et/ou de polyester.

Les tissus présentent des avantages similaires à ceux des mousses, ainsi que la caractéristique d'un encombrement extrêmement réduit. La fabrication d'une enveloppe externe 12 en tissu peut être effectuée par les procédés habituels de l'industrie textile comme la couture.

Les mailles des tissus et les alvéoles des mousses ont une taille et une répartition choisies de sorte à éviter l'écoulement vers l'extérieur du premier matériau 40 à l'état malléable ou liquide.

Préférentiellement, un composant principal du premier matériau thermoplastique 40 est un polymère thermoplastique. Ledit polymère est préférentiellement choisi parmi une polycaprolactone et un acide polylactique. Plus préférentiellement, le polymère thermoplastique est une polycaprolactone de masse moléculaire moyenne comprise entre 20.000 g. mol⁻¹ et 150.000 g.mol⁻¹. A titre d'exemple, une température de fusion de la polycaprolactone est d'environ 60 °C.

En variante, un composant principal du premier matériau thermoplastique 40 est un polycarbonate, dont une température de fusion est d'environ 140 °C. Dans ce cas, le premier seuil T₁ est supérieur à 90 °C. L'enveloppe externe 12 a alors préférentiellement une épaisseur suffisante pour garder une température de surface permettant sa manipulation, même dans le cas où le premier matériau thermoplastique 40 est à l'état malléable.

Préférentiellement, le premier matériau thermoplastique 40 comprend un agent électriquement et/ou thermiquement conducteur. Plus préférentiellement, ledit agent comprend ou est constitué de particules de carbone, telles que le noir de carbone, la poudre de graphite ou les nanotubes de carbones. Alternativement, ledit agent comprend ou est constitué de particules métalliques telles que de la poudre de cuivre.

Selon un mode de réalisation, le premier matériau thermoplastique 40 comprend en outre des charges, ou des additifs tels que des agents de protection aux UV ou à l'oxydation.

Préférentiellement, le premier matériau thermoplastique 40 comprend une polycaprolactone et du noir de carbone, un pourcentage massique total de la polycaprolactone et du noir de carbone étant supérieur ou égal à 95% par rapport à la masse totale du premier matériau thermoplastique 40. Plus préférentiellement, un pourcentage massique du noir de carbone est compris entre 10% et 23%, encore plus préférentiellement compris entre 15% et 20%, par rapport à la masse totale du premier matériau thermoplastique 40.

Selon un mode de réalisation préférentiel, tel que représenté à la figure 1, le dispositif 10 comprend en outre un appareil électrique 50, apte à transférer de la chaleur par effet Joule audit premier matériau thermoplastique 40. L'appareil électrique 50 comprend par exemple un boîtier de commande 52, ainsi que deux électrodes 54, 56 reliées audit boîtier de commande 52. Selon ce mode de réalisation, le premier matériau thermoplastique 40 est choisi électriquement conducteur, de résistivité adaptée pour convertir en chaleur la quantité voulue d'énergie électrique qui le traverse.

Préférentiellement, chaque électrode 54, 56 comporte un fil 58, 60 inséré dans la première couche 20 au contact du premier matériau 40. Chaque fil 58, 60 est formé d'un matériau électriquement conducteur, de préférence métallique.

Préférentiellement, les fils 58, 60 s'étendent dans la première couche 20 selon deux trajectoires sensiblement parallèles. Dans l'exemple de la figure 1, les fils 58, 60 s'étendent sensiblement selon Y, entre les deux bords 12 du dispositif 10. Plus préférentiellement, une distance 62 selon X entre les deux fils 58, 60 est sensiblement constante sur toute leur longueur, afin d'obtenir une résistance et une diffusion thermique homogènes dans le premier matériau 40.

Les fils 58, 60 sont avantageusement disposés le plus près possible des bords 14 parallèles à Y, afin que la chaleur soit diffusée sur une large surface du dispositif 10.

Préférentiellement, les fils 58, 60 ont une trajectoire ondulée dans la première couche 20, afin de permettre un étirement du dispositif 10 selon leur direction principale. Dans l'exemple de la figure 1, les fils 58, 60 serpentent entre les ponts 30 de deuxième matériau 42. De préférence, les fils 58, 60 contournent les ponts 30 au lieu de les traverser.

Préférentiellement, une première extrémité de chaque fil 58, 60 est reliée au boîtier de commande 52 et une deuxième extrémité est noyée dans la première couche 20.

Préférentiellement, le logement interne 18 présente une section d'aire sensiblement constante entre les deux fils 58, 60. Plus précisément, la première couche 20 présente une section d'aire sensiblement constante selon la direction X entre les deux fils 58, 60. La diffusion thermique par effet Joule est ainsi sensiblement homogène en tout point de la première couche 20 entre lesdits fils 58, 60.

Préférentiellement, le boîtier de commande 52 comporte une source d'énergie électrique 62, telle qu'une pile ou une batterie. En variante, le boîtier de commande 52 comporte des moyens de raccordement à une alimentation électrique externe.

Préférentiellement, le boîtier de commande 52 comporte en outre un dispositif électronique 64 de régulation de la diffusion d'énergie électrique dans les électrodes 54, 56. Ledit dispositif électronique 64 comporte notamment une carte électronique. Par exemple, le dispositif électronique 64 est apte à réguler la quantité d'énergie diffusée, ou la durée de diffusion.

Alternativement, le dispositif électronique 64 est relié à une sonde de température (non représentée) au contact de la première couche 20. Par exemple, le dispositif électronique 64 est apte à cesser la diffusion d'énergie électrique lorsque la température du premier matériau 40, mesurée par ladite sonde, dépasse un troisième seuil T₃. Le troisième seuil T₃ est par exemple compris entre les premier et deuxième seuils T₁, T₂.

Un procédé de fabrication du dispositif 10 va maintenant être décrit. Une première couche 20 est réalisée à partir du premier matériau thermoplastique 40. Par exemple, le premier matériau 40, à une température supérieure ou égale à T₁, est conformé sous forme de plaque, notamment par extrusion, par compression, par calendrage ou à l'aide d'un rouleau compresseur. La plaque ainsi formée est ensuite perforée d'ouvertures correspondant aux emplacements des ponts 30. Alternativement la plaque peut être formée directement avec les ouvertures correspondant aux emplacements des ponts 30, par exemple par moulage.

Les fils 58, 60 sont ensuite disposés sur la plaque de premier matériau 40. De préférence, les fils sont légèrement enfoncés dans la plaque, le matériau 40 étant dans un état ramolli. Alternativement les fils peuvent être incorporés simultanément à la formation de la plaque.

En parallèle, le deuxième matériau 42, par exemple un élastomère à l'état liquide, est coulé dans un moule pour former la deuxième couche 22. Après réticulation partielle de ladite deuxième couche, la première couche 20 est posée par-dessus.

Du deuxième matériau 42 à l'état liquide est ensuite coulé dans un moule sur les première 20 et deuxième 22 couches, pour former la troisième couche. Le deuxième matériau 42 remplit alors les ouvertures de la première couche 20, formant les ponts 30. La réticulation du deuxième matériau 42 au niveau des bords 12, 14 et des ponts 30 solidarise entre elles les deuxième 22 et troisième 24 couches.

Alternativement, la première couche 20 est maintenue dans une position appropriée dans un moule et les deuxième 22 et troisième 24 couches sont formées en une fois, par coulage ou injection du deuxième matériau souple 42 dans ledit moule.

Selon une variante de réalisation, les deuxième 22 et troisième 24 couches sont formées de deux matériaux distincts, aptes à se souder mécaniquement l'un à l'autre pendant la réticulation, chacun desdits matériaux présentant les propriétés physiques décrites ci-dessus. Les deux matériaux distincts sont par exemples deux types de silicones différents.

Les fils sont ensuite reliés à un boîtier de commande 52 pour former les électrodes 54, 56. Le dispositif 10 tel que décrit ci-dessus est ainsi obtenu.

Un procédé d'utilisation du dispositif 10 va maintenant être décrit. Dans un état initial, le dispositif 10 est par exemple dans la première configuration représentée aux figures 1 et 2. Le premier matériau 40 est dans un état rigide. La température ambiante est par exemple comprise entre 10 °C et 30 °C.

La première couche 20 est alors chauffée pour faire passer le premier matériau 40 à une température comprise entre le premier seuil T₁ et le deuxième seuil T₂. Dans le cas du dispositif 10 représenté à la figure 1, le boîtier de commande 52 transfère par exemple de l'énergie électrique au premier matériau 40 par l'intermédiaire des électrodes 54, 56. En variante, le dispositif 10 est chauffé par un autre moyen, par exemple par trempage dans de l'eau chaude.

Sous l'action du chauffage, le premier matériau 40 passe à un état de fluide visqueux, apte à changer de forme. Le dispositif 10 est alors déformé, de manière à recourber et/ou à étirer l'enveloppe externe 16. Le dispositif 10 est par exemple placé dans une deuxième configuration recourbée, représentée à la figure 3.

Le dispositif 10 est maintenu dans la deuxième configuration durant une phase de refroidissement du premier matériau 40. Lorsque la température dudit matériau passe en-dessous du premier seuil T₁, le premier matériau 40 retrouve sa rigidité et conserve la forme adoptée dans la deuxième configuration. L'enveloppe externe 16 est alors maintenue dans la deuxième configuration par le premier matériau 40.

Une application possible du dispositif 10 est notamment son utilisation comme composant d'un élément de siège pour individu de moyen de transport, ou d'attelle paramédicale, ou de jouet pour enfant, ou de vêtement, ou encore d'accessoire de massage.

Les exemples ci-dessous illustrent l'invention sans toutefois la limiter.

### Exemple 1 : préparation du premier matériau thermoplastique 40

Un premier matériau 40 est réalisé à partir de polycaprolactone (commercialisé par Perstorp sous la dénomination « CAPA 6500 ») de température de fusion T_{f} = 60 °C et de masse moléculaire moyenne de 50.000 g.mol⁻¹. La polycaprolactone est mélangée à du noir de carbone en poudre (commercialisé par Cabotcorp sous la dénomination « Black Pearl 2000 ») par broyage dans un mortier chauffé à 80 °C. Le premier matériau 40, ci-après dénommé PCL-BP, est ainsi obtenu sous forme d'une pâte homogène.

Le tableau 1 ci-dessous indique la résistivité électrique du PCL-BP en fonction du pourcentage massique de noir de carbone :

**Tableau 1**

| | | | | | | |
|---|---|---|---|---|---|---|
| **Charge noir de carbone (% massique)** | 10 | 12,50 | 15 | 17,5 | 20 | 22,5 |
| **Résistivité (Ohm.m)** | ∞ | 72554 | 0,414 | 0,118 | 0,031 | 0,025 |

Au-delà de 23% de noir de carbone dans le mélange, le matériau obtenu est friable.

### Exemple 2 : fabrication du dispositif 10

Une plaque de PCL-BP à 20% massique de noir de carbone est réalisée à l'aide d'un rouleau compresseur. En référence à la figure 1, la plaque a une épaisseur 26 comprise entre 1,5 mm et 3 mm, et des dimensions selon X et Y respectivement de 27 cm et 23 cm.

La plaque ainsi réalisée est ensuite perforée de trous circulaires de diamètre 32 de 5 mm (figure 1). Les centres des cercles sont disposés aux sommets de triangles équilatéraux de côté 34 de 7 mm (figure 1), l'un des côtés des triangles étant parallèle à X.

Des fils de cuivre 58, 60 sont ensuite encastrés dans la plaque de PCL-BP, selon des trajectoires parallèles sensiblement disposées selon Y.

Une première couche de silicone (commercialisé par Création Silicone sous la dénomination «Dragon Skin 10 fast ») est coulée dans un moule rectangulaire de dimensions selon X et Y respectivement de 30 cm et 26 cm. En référence à la figure 1, la plaque a une épaisseur 28 comprise entre 1,5 mm et 3 mm.

Après réticulation partielle de la première couche de silicone, la plaque perforée de PCL-BP est déposée sur ladite couche. Une deuxième couche de silicone est ensuite coulée par-dessus la plaque de PCL-BP. Après réticulation totale de la silicone, les deux couches sont solidarisées et forment l'enveloppe externe 16 du dispositif 10.

Une extrémité des fils de cuivre 58, 60 est alors reliée à un boîtier de commande 52 pour former les électrodes 54, 56.

## Revendications

1. Dispositif déformable (10) comprenant un premier matériau thermoplastique (40), ledit premier matériau comprenant un polymère thermoplastique, ledit premier matériau étant sensiblement rigide à une température inférieure à un premier seuil (T₁) et malléable à une température supérieure audit premier seuil (T₁), ledit premier seuil (T₁) étant préférentiellement compris entre 40 °C et 90 °C,
le dispositif comprenant une enveloppe externe (16) formée d'au moins un deuxième matériau souple (42), ladite enveloppe externe définissant un logement interne (18), le premier matériau (40) remplissant le logement interne,
l'au moins un deuxième matériau souple (42) formant l'enveloppe externe étant à l'état solide au moins jusqu'à un deuxième seuil de température (T₂) supérieur de 10 °C, préférentiellement de 20 °C, au premier seuil (T₁),
le dispositif étant **caractérisé en ce que** le premier matériau thermoplastique comprend un agent électriquement et/ou thermiquement conducteur, ledit agent étant constitué de particules de carbone.

2. Dispositif selon la revendication 1, dans lequel le premier matériau thermoplastique (40) comprend un polymère thermoplastique choisi parmi une polycaprolactone, un acide polylactique et un polycarbonate.

3. Dispositif selon la revendication 1 ou 2, dans lequel le premier matériau thermoplastique comprend une polycaprolactone et du noir de carbone, un pourcentage massique total de la polycaprolactone et du noir de carbone étant préférentiellement supérieur ou égal à 95%, un pourcentage massique du noir de carbone étant préférentiellement compris entre 10% et 23%, plus préférentiellement entre 15% et 20%.

4. Dispositif selon l'une des revendications précédentes, dans lequel l'au moins un deuxième matériau souple (42) est un élastomère, préférentiellement une silicone.

5. Dispositif selon l'une des revendications 1 à 3, dans lequel l'au moins un deuxième matériau souple (42) est une mousse, préférentiellement une mousse polyuréthane.

6. Dispositif selon l'une des revendications précédentes, dans lequel l'au moins un deuxième matériau souple (42) est un matériau tissé, comprenant de préférence des fibres de de coton et/ou de polyester.

7. Dispositif selon l'une des revendications précédentes, dans lequel le logement interne (18) rempli du premier matériau thermoplastique (40) a la forme d'une première couche (20) interposée entre une deuxième (22) et une troisième (24) couches de deuxième matériau souple (42).

8. -Dispositif selon la revendication 7, dans lequel la première couche (20) est traversée par une pluralité de ponts (30) de deuxième matériau souple, lesdits ponts reliant les deuxième et troisième couches, lesdits ponts étant préférentiellement répartis de manière régulière sur une surface de la première couche.

9. Dispositif selon l'une des revendications précédentes, comprenant en outre un appareil électrique (50) au contact du premier matériau thermoplastique, ledit appareil étant apte (52, 54, 56) à communiquer de la chaleur par effet Joule audit premier matériau thermoplastique.

10. Procédé de fabrication d'un dispositif (10) selon l'une des revendications 7 à 9, comprenant les étapes suivantes :
- réalisation d'une première couche (20) du premier matériau thermoplastique ;
- réalisation d'une deuxième couche (22) de deuxième matériau souple ; puis :
- positionnement de la première couche sur la deuxième couche ; puis
- coulage de deuxième matériau souple à l'état liquide sur les première et deuxième couches pour former la troisième couche (24), puis solidification dudit deuxième matériau.

11. Procédé d'utilisation d'un dispositif (10) selon l'une des revendications 1 à 9, comprenant les étapes suivantes :
- chauffage du premier matériau thermoplastique (40) pour le faire passer à une température comprise entre le premier seuil (T₁) et le deuxième seuil (T₂) ; puis
- conformation du dispositif selon une forme ; puis
- refroidissement du premier matériau thermoplastique (40) pour le faire passer à une température inférieure au premier seuil (T₁).

12. Procédé d'utilisation selon la revendication 11 prise en combinaison avec la revendication 9, dans lequel le chauffage du premier matériau thermoplastique est effectué au moyen de l'appareil électrique (50).

## Patentansprüche

1. Verformbare Vorrichtung (10), umfassend ein erstes thermoplastisches Material (40), das erste Material umfassend ein thermoplastisches Polymer, wobei das erste Material bei einer Temperatur unterhalb eines ersten Schwellenwerts (Ti) im Wesentlichen steif ist und bei einer Temperatur oberhalb des ersten Schwellenwerts (Ti) verformbar ist, wobei der erste Schwellenwert (Ti) vorzugsweise zwischen 40 °C und 90 °C liegt,
die Vorrichtung umfassend eine äußere Hülle (16), die aus mindestens einem zweiten flexiblen Material (42) gebildet ist, wobei die äußere Hülle ein inneres Gehäuse (18) definiert und das erste Material (40) das innere Gehäuse ausfüllt,
wobei das mindestens eine zweite flexible Material (42), das die äußere Hülle bildet, mindestens bis zu einem zweiten Temperaturschwellenwert (T₂), der 10 °C, vorzugsweise 20 °C, über dem ersten Schwellenwert (T₁) liegt, in festem Zustand ist,
wobei die Vorrichtung **dadurch gekennzeichnet ist, dass** das erste thermoplastische Material ein elektrisch und/oder thermisch leitfähiges Mittel umfasst, wobei das Mittel aus Kohlenstoffpartikeln besteht.

2. Vorrichtung nach Anspruch 1, wobei das erste thermoplastische Material (40) ein thermoplastisches Polymer umfasst, das ausgewählt ist aus einem Polycaprolacton, einer Polymilchsäure und einem Polycarbonat.

3. Vorrichtung nach Anspruch 1 oder 2, wobei das erste thermoplastische Material ein Polycaprolacton und Ruß umfasst, wobei ein Gesamtmassenanteil des Polycaprolactons und des Rußes vorzugsweise 95 % oder mehr ist, wobei ein Massenanteil an Ruß vorzugsweise zwischen 10 % und 23 %, bevorzugter zwischen 15 % und 20 %, liegt.

4. Vorrichtung nach einem der vorherigen Ansprüche, wobei das mindestens eine zweite flexible Material (42) ein Elastomer, vorzugsweise ein Silikon, ist.

5. Vorrichtung nach einem der Ansprüche 1 bis 3, wobei das mindestens eine zweite flexible Material (42) ein Schaumstoff, vorzugsweise ein Polyurethanschaumstoff, ist.

6. Vorrichtung nach einem der vorherigen Ansprüche, wobei das mindestens eine zweite flexible Material (42) ein gewebtes Material ist, vorzugsweise umfassend Baumwoll- und/oder Polyesterfasern.

7. Vorrichtung nach einem der vorherigen Ansprüche, wobei das mit dem ersten thermoplastischen Material (40) gefüllte innere Gehäuse (18) die Form einer ersten Schicht (20) aufweist, die zwischen einer zweiten (22) und einer dritten (24) Schicht aus einem zweiten flexiblen Material (42) eingefügt ist.

8. Vorrichtung nach Anspruch 7, wobei die erste Schicht (20) von einer Vielzahl von Stegen (30) aus einem zweiten flexiblen Material durchquert wird, wobei die Stege die zweite und dritte Schicht verbinden, wobei die Stege vorzugsweise gleichmäßig über eine Oberfläche der ersten Schicht verteilt sind.

9. Vorrichtung nach einem der vorherigen Ansprüche, ferner umfassend ein elektrisches Gerät (50) in Kontakt mit dem ersten thermoplastischen Material, wobei das Gerät geeignet ist (52, 54, 56), um Wärme durch Joule-Effekt auf das erste thermoplastische Material zu übertragen.

10. Verfahren zur Herstellung einer Vorrichtung (10) nach einem der Ansprüche 7 bis 9, umfassend die folgenden Schritte:
- Herstellen einer ersten Schicht (20) aus dem ersten thermoplastischen Material;
- Herstellen einer zweiten Schicht (22) aus einem zweiten flexiblen Material; dann:
- Positionieren der ersten Schicht auf der zweiten Schicht; dann
- Gießen von einem zweiten flexiblen Material in flüssigem Zustand über die erste und die zweite Schicht, um die dritte Schicht (24) zu bilden, und anschließendes Verfestigen des zweiten Materials.

11. Verfahren zur Verwendung einer Vorrichtung (10) nach einem der Ansprüche 1 bis 9, umfassend die folgenden Schritte:
- Erwärmen des ersten thermoplastischen Materials (40) auf eine Temperatur, die zwischen dem ersten Schwellenwert (T₁) und dem zweiten Schwellenwert (T₂) liegt; dann
- Konformation der Vorrichtung gemäß einer Form; dann
- Abkühlen des ersten thermoplastischen Materials (40) auf eine Temperatur unterhalb des ersten Schwellenwerts (T₁).

12. Verfahren zur Verwendung nach Anspruch 11 in Kombination mit Anspruch 9 genommen, wobei das Erwärmen des ersten thermoplastischen Materials mittels des elektrischen Geräts (50) erfolgt.

## Claims

1. A deformable device (10), including a first thermoplastic material (40), said first material including a thermoplastic polymer, said first material being substantially rigid at a temperature lower than a first threshold (T₁) and malleable at a temperature higher than said first threshold (T₁), said first threshold (T₁) preferably being comprised between 40°C and 90°C,
the device including an outer shell (16) made of at least one second flexible material (42), said outer shell defining an inner recess (18), the first material (40) filling the inner recess, the at least one second flexible material (42) forming the outer shell being in solid state at least until a second temperature threshold (T₂) higher than the first threshold (T₁) by 10°C, preferably by 20°C,
the device being **characterized in that** the first thermoplastic material includes an electrically and/or thermally conductive agent, said agent being formed of carbon particles.

2. The device of claim 1, wherein the first thermoplastic material (40) includes a thermoplastic polymer selected among a polycaprolactone, a polylactic acid and a polycarbonate.

3. The device of one of claim 1 or claim 2, wherein the first thermoplastic material includes a polycaprolactone and carbon black, a total percentage by weight of polycaprolactone and carbon black preferably is higher than or equal to 95%, a percentage mass of carbon black preferably is between 10% and 23%, more preferably between 15% and 20%.

4. The device of one of the preceding claims, wherein the at least one second flexible material (42) is an elastomer, preferably a silicone.

5. The device of one of claims 1 to 3, wherein the at least one second flexible material (42) is a foam, preferably a polyurethane foam.

6. The device of one of the preceding claims, wherein the at least one second flexible material (42) is a woven material, preferably including fibers of cotton and/or polyester.

7. The device of one of the preceding claims, wherein the inner casing (18) is filled with the first thermoplastic material (40) and has the shape of a first layer (20) interposed between a second (22) and third (24) second flexible material layer (42).

8. The device of claim 7, wherein the first layer is crossed by several connections that are made of the second flexible material, said connections linking the second and third layers, said connections being preferably evenly distributed over the surface of the first layer.

9. The device of one of the preceding claims, further comprising an electrical apparatus (50) in contact with the first thermoplastic material, said apparatus being capable (52, 54, 56) of transferring heat by Joule effect to the first thermoplastic material.

10. A manufacturing process of the device (10) of one of claims 7 to 9, comprising the following steps:
- Making of a first layer (20) of the first thermoplastic material;
- Making of a second layer (22) of the second flexible material; then:
- Positioning of the first layer on the second layer; then
- Casting of the second flexible material in the liquid state on the first and second layers to form the third layer (24), and solidification of said the second material.

11. A using process of the device (10) of one of claims 1 to 9 comprising the following steps:
- Heating up of the first thermoplastic material (40) to a temperature between the first threshold (T₁) and the second threshold (T₂);then
- Shaping of the device in a form; then
- Cooling down of the first thermoplastic material (40) to a temperature lower than the first threshold (T₁).

12. A using process according to claim 12, in combination with claim 9, wherein heating the first thermoplastic material is performed by means of the electrical apparatus (50).
